# EUROPEAN PATENT APPLICATION

(11) **EP 4 339 855 A1**
(43) Date of publication of application: **20.03.2024**
(21) Application number: 22806370.7
(22) Date of filing: 07.04.2022
(51) Int. Cl.: G06Q 10/06

(54) **ONLINE AND OFFLINE HYBRID EDUCATION METHOD AND SYSTEM, ELECTRONIC DEVICE AND STORAGE MEDIUM**

(30) Priority: 11.05.2021 CN 202110511047
(71) Applicant: Zhejiang Geely Holding Group Co., Ltd, Hangzhou, Zhejiang 310051 (CN)
(72) Inventor: LI, Shufu, Hangzhou, Zhejiang 310051 (CN); LU, Dan, Hangzhou, Zhejiang 310051 (CN)
(74) Representative: Zaboliene, Reda
(86) International application number: PCT/CN2022/085547
(87) International publication number: WO 2022/237400

(57) **Abstract**

A student occupational ideal-based online and offline hybrid education method and system, an electronic device and a storage medium. The education method comprises: acquiring a target occupational role and first personalized features of a student user; according to the target occupational role and the first personalized features, matching a first personalized curriculum system and a teacher user corresponding to the student user from within a pre-established occupational role curriculum module library and a teacher information library; and according to the first personalized curriculum system, providing to the student user online or offline teaching of corresponding curriculum taught by the corresponding teacher user. A personalized education solution is implemented for the occupational aspirations of each student user by providing the student users with abilities and knowledge curriculum teaching taught by a matching teacher user and corresponding to the occupational aspirations thereof.

## Description

### TECHNICAL FIELD

The invention relates to the field of education technology, in particular to an online and offline hybrid education method, system, electronic device and storage medium based on student's career aspiration.

### BACKGROUND TECHNIQUE

At present, the level and scale of global higher education have reached unprecedented heights. At the same time, with the development of higher education, universities and educational institutions around the world have accumulated a large number of high-quality courses. However, due to the limited operating costs of colleges and universities, limited teaching staff and teachers' own experience, colleges and universities can not meet the individualized education needs of every student by relying on their own teaching resources, and cannot provide each student with exclusive education to meet their needs. A talent training program for career dreams. This has caused a large gap between the knowledge learned by many students during their higher education and their career dreams, which has greatly wasted precious learning time and educational resources. Moreover, it is difficult for students to quickly enter a career role after entering the workplace. In addition, because different teachers have different knowledge abilities and characteristics, and their teaching styles are also very different, these will have a significant impact on the teaching and imparting of knowledge and the reception, digestion and absorption of knowledge by different students.

At present, many explorations have been made on personalized education methods, but most of them are limited to optimizing classroom teaching methods (such as using small class teaching, increasing interaction, etc.) and reducing the ratio of students to teachers as much as possible. The educational ideal of "everyone has thousands of faces" is still far away, or there is a deviation in the path.

Therefore, there is an urgent need to develop a method that can match relevant courses and teachers to student's career aspiration to form an educational training program that is unique to each student.

### SUMMARY OF THE INVENTION

In view of the above problems, an online and offline hybrid education method, system, electronic device and storage medium based on student's career aspiration that overcome the above problems or at least partially solve the above problems are proposed.

An object of the first aspect of the present invention is to provide a student user-oriented online and offline hybrid education method based on student career aspiration, which can match corresponding personalized courses for student users according to their career aspirations and individual characteristics system and teachers to realize individualized educational programs.

A further purpose of the first aspect of the present invention is to accurately identify the ideal career role of the student user.

Yet another further purpose of the first aspect of the present invention is to solve the problem of anti-tampering in the learning process.

An object of the second aspect of the present invention is to provide an online and offline hybrid education method based on student's career aspiration for teacher users, which can match the corresponding students and personalized course system for teacher users to achieve personalized education programs, according to the knowledge ability and personalized characteristics of teacher users.

In particular, according to an aspect of the embodiments of the present invention, an online and offline hybrid education method based on student's career aspiration is provided, including:
obtaining a target career role and a first personalized characteristic of a student user;
according to the target career role and the first personalized characteristic, matching a first personalized course system and a teacher user corresponding to the student user from a course module library of a pre-established career role and a teacher information library ;
according to the first personalized course system, providing the student user with online or offline teaching of a corresponding course taught by the corresponding teacher user;
wherein, the course module library of the career role includes an ability knowledge system library of the career role and an ability-knowledge-course corresponding relationship library, the teacher information library stores a knowledge ability and the second personalized characteristics of the teacher user.

Optionally, the step of obtaining the target career role and the first personalized characteristic of a student user includes:
according to a student user information, analyzing the student user's psychological profile and/or behavior trajectory through artificial intelligence , so as to identify the first personalized characteristic of the student user;
determining and recommending an ideal career role for the student user for selection according to the first personalized characteristic;
determining the target career role of the student user according to a selection operation of the student user.

Optionally, a the step of according to the target career role and the first personalized characteristic, matching the first personalized course system and the teacher user corresponding to the student user from the course module library of the pre-established career role and the teacher information library includes:
searching the ability knowledge system library of the career role to determine an ability and knowledge system required by the target career role and searching the ability-knowledge-course corresponding relationship library to match a course corresponding to the ability and knowledge system required by the target career role and making the first personalized course system composed of the corresponding courses;
smart matching the first personalized course system with the knowledge and ability of the teacher user in the teacher information library, and matching the first personalized characteristic with the second personalized characteristic in the teacher information library, to determine the teacher user corresponding to the student user.

Optionally, the teacher information library is established in the following way:
making a portrait of the teacher user by artificial intelligence, identifying the knowledge ability and the second personalized characteristic possessed by the teacher user, and establishing the teacher information library based on the identified knowledge ability and the second personalized characteristic;
wherein the ability knowledge system library of the career role is pre-established by collecting occupational qualification data .

Optionally, after matching the first personalized course system and the teacher user corresponding to the student user, the method further includes:
regularly carrying out psychological portrait of the student user through artificial intelligence, adjusting the ability and knowledge system required by the target career role and the first personalized characteristics according to the results of the psychological portrait, and adjusting the first personalized course system corresponding to the student user and the teacher user according to the adjusted ability and knowledge system required by the target career role and the first personalized characteristic.

Optionally, after matching the first personalized course system and the teacher user corresponding to the student user, the method further includes:
receiving a career role change request of the student user, and changing the target career role of the student user according to the career role change request;
according to the changed target career role and the first personalized characteristic, matching a second personalized course system and a new teacher user corresponding to the student user from the course module library of the career role and the teacher information library ;
comparing the courses that have been taught in the first personalized course system with the second personalized course system, and recording the status of the course in the second personalized course system that is the same as the course that has been taught as completed, and storing the course that has been taught but is not included in the second personalized course system as the competency addition of the student user ;
providing the student user with teaching in the uncompleted course in the second personalized course system under the teaching of the new teacher user.

Optionally, before according to the first personalized course system, providing the student user with online or offline teaching of the corresponding course taught by the corresponding teacher user, the method also includes:
signing an electronic contract between the student user, the first personalized course system and the corresponding teacher user through block chain technology.

Optionally, he first personalized course system includes an online course;

The step of according to the first personalized course system, providing the student user with online or offline teaching of a corresponding course taught by the corresponding teacher user includes:
providing the online course teaching resources to the student user based on audio and video technology and/or holographic image technology.

According to another aspect of the embodiment of the present invention, an online and offline hybrid education method based on student's career aspiration is also provided, including:
obtaining a knowledge ability and a second personalized characteristic of a teacher user;
according to the knowledge ability and the second personalized characteristic of the teacher user, matching a student user corresponding to the teacher user and a first personalized course system corresponding to the student user from a course module library of a pre-established career role and a student information library, wherein, the course module library of the career role includes an ability knowledge system library of the career role and an ability-knowledge-course corresponding relationship library, the student information library stores a target career role and a first personalized characteristic of the student user;
allowing the teacher user teaching the student user a corresponding course of the first personalized course system by online or offline taught.

Optionally, the step of according to the knowledge ability and the second personalized characteristic, matching the student user corresponding to the teacher user and a first personalized course system corresponding to the student user from the course module library of the pre-established career role and the student information library includes:
searching the ability knowledge system library of the career role to determine a career role corresponding to an knowledge ability possessed by the teacher user, matching the corresponding career role with the target career role of the student information library , and smart matching the second personalized characteristic with the first personalized course system of the student information library, to determine the student user corresponding to the teacher user;
searching the ability knowledge system library of the career role to determine an ability and knowledge system required by the target career role and searching the ability-knowledge-course corresponding relationship library to match a course corresponding to the ability and knowledge system required by the target career role and making the first personalized course system composed of the corresponding courses.

Optionally, the student information library is established in the following ways:
according to the student user information, using artificial intelligence to analyze the student user's psychological profile and/or behavior trajectory, so as to identify the first personalized characteristic of the student user;
determining and recommending an ideal career role for the student user for selection according to the first personalized characteristic;
determining the target career role of the student user according to a selection operation of the student user;
establishing the student information library based on the target career role of the student user and a first personalized characteristic;
wherein the ability knowledge system library of the career role is pre-established by collecting occupational qualification data.

Optionally, the first personalized characteristic of the student user in the student information library is adjusted according to the results of regularly performing psychological portraits of the student user through artificial intelligence.

Optionally, the target career role of the student user of the student information library is changed according to the student user's career role change request.

Optionally, before allowing the teacher user teaching the student user the corresponding course of the first personalized course system by online or offline taught, the method further includes:
signing an electronic contract between the teacher user, the corresponding student user and the first personalized course system through block chain technology.

Optionally, the first personalized course system includes an online course;
the step of allowing the teacher user teaching the student user a corresponding course of the first personalized course system by online or offline taught includes:
providing the online course teaching resources to the student user based on audio and video technology and/or holographic image technology.

According to yet another aspect of the embodiments of the present invention, an online and offline hybrid education system based on student's career aspiration is also provided, including:
a first obtaining module, configured to obtain a target career role and a first personalized characteristic of a student user;
a second obtaining module, configured to obtain a knowledge ability and a second personalized characteristic of a teacher user;
a matching module, configured to according to the target career role and the first personalized characteristic, and the knowledge ability and the second personalized characteristic of the teacher user, matching a first personalized course system and the teacher user corresponding to the student user from a course module library of a pre-established career role and
a teaching module, is configured to providing the student user with online or offline teaching of a corresponding course taught by the corresponding teacher user, according to the first personalized course system;
wherein, the course module library of the career role includes an ability knowledge system library of the career role and an ability-knowledge-course corresponding relationship library.

According to yet another aspect of the embodiments of the present invention, there is also provided an electronic device, including: a processor; and a memory for storing instructions executable by the processor; wherein the processor is configured to execute the instructions , in order to realize the online and offline hybrid education method based on the student's career aspiration according to any one of the above.

According to still another aspect of the embodiments of the present invention, a storage medium is also provided, and when the instructions in the storage medium are executed by the processor of the electronic device, the electronic device can execute the method according to any one of the preceding items. An online and offline hybrid education method based on student's career aspiration.

The online and offline hybrid education method and system based on student's career aspiration provided by the embodiments of the present invention can focus on the target career role and the first personalized characteristics of the student user, as well as the knowledge ability and the second personalized characteristic of the teacher user, match between student users and teacher users, and develop a personalized course system for student users, so as to provide each student user with the ability and knowledge course teaching by the matching teacher user corresponding to his career aspirations, to achieve a personalized education program.

Further, by using artificial intelligence to analyze the student user's psychological profile and/or behavior trajectory to identify the first personalized characteristics of the student user, and then determine and recommend the student user's ideal career role so it can more accurately determine the career aspiration of student users, and accurately lock student users with career roles.

Further, artificial intelligence is used to profile the teacher user to improve the knowledge ability of the teacher user and the recognition accuracy of the second personalized characteristic, thereby improving the matching accuracy between the teacher user and the student user and their courses.

Further, electronic contracts are signed between student users and their personalized course systems and corresponding the matching teacher users through block chain technology, which locks the relationship contract formed by the three in the personalized education program and solves the problem of tamper-proof in the learning process and improves the privacy and security of teaching.

Further, the mature audio and video technology and advanced holographic image technology are used to build an online education learning platform and a simulation practice platform to enhance the teaching effect.

The above description is only an overview of the technical solution of the present invention. In order to better understand the technical means of the present invention, it can be implemented according to the contents of the description, and in order to make the above and other purposes, characteristics and advantages of the present invention more obvious and understandable, the specific embodiments of the present invention are enumerated below.

Those skilled in the art will be more aware of the above and other objects, advantages and characteristics of the present invention according to the following detailed description of specific embodiments of the present invention in conjunction with the accompanying drawings.

### DESCRIPTION OF DRAWINGS

Various other advantages and benefits will become apparent to those of ordinary skill in the art upon reading the following detailed description of the preferred embodiment. The drawings are only for the purpose of illustrating a preferred embodiment and are not to be considered as limiting the invention. Also throughout the drawings, the same reference numerals are used to designate the same components. In the attached picture:
FIG. 1 shows a schematic flow diagram of an online and offline hybrid education method based on student's career aspiration according to an embodiment of the present invention;
FIG. 2 shows a schematic flow diagram of an online and offline hybrid education method based on student's career aspiration according to another embodiment of the present invention;
FIG. 3 shows a schematic flow chart of an online and offline hybrid education method based on student's career aspiration according to another embodiment of the present invention;
FIG. 4 shows a schematic flow chart of an online and offline hybrid education method based on student's career aspiration according to still another embodiment of the present invention;
FIG. 5 shows a schematic structural diagram of an online and offline hybrid education system based on student's career aspiration according to an embodiment of the present invention;
FIG. 6 shows a schematic structural diagram of an online and offline hybrid education system based on student's career aspiration according to another embodiment of the present invention.

### EMBODIMENTS OF THE PRESENT APPLICATION

Exemplary embodiments of the present disclosure will be described in more detail below with reference to the accompanying drawings. Although exemplary embodiments of the present disclosure are shown in the drawings, it should be understood that the present disclosure may be embodied in various forms and should not be limited by the embodiments set forth herein. Rather, these embodiments are provided for more thorough understanding of the present disclosure and to fully convey the scope of the present disclosure to those skilled in the art.

In order to solve the above technical problems, an embodiment of the present invention proposes an online and offline hybrid education method based on student's career aspiration. The educational method provided by the present invention can be applied to various levels of education, and is especially suitable for higher education, such as the education of college students.

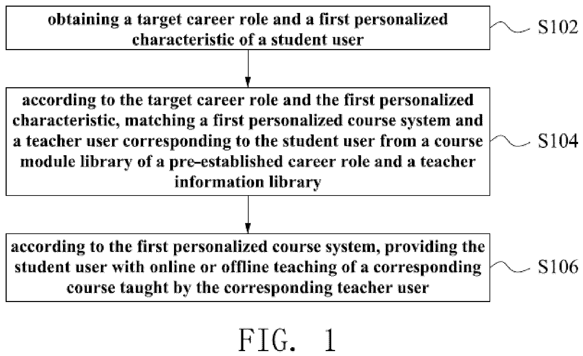

FIG. 1 shows a schematic flowchart of an online and offline hybrid education method based on student's career aspiration according to an embodiment of the present invention. The education method in this embodiment is oriented to student users. Referring to FIG. 1, the educational method based on a career aspiration may at least include the following steps S102 to S106.

Step S102, obtaining a target career role and a first personalized characteristic of a student user.

Step S104, according to the target career role and the first personalized characteristic, matching a first personalized course system and a teacher user corresponding to the student user from a course module library of a pre-established career role and a teacher information library.

In the embodiment of the present invention, the course module library of the career role includes an ability knowledge system library of the career role and an ability-knowledge-course corresponding relationship library, the teacher information library stores a knowledge ability and the second personalized characteristics of the teacher user.

Step S106, according to the first personalized course system, providing the student user with online or offline teaching of a corresponding course taught by the corresponding teacher user.

The student user in the embodiment of the present invention may be a student at school, or a social person who needs vocational training.

The online and offline hybrid education method based on students' career aspirations oriented to student user and provided by the embodiment of the present invention can match the corresponding personalized course system and teacher users according to the career aspirations and personalized characteristics of student users, and then, according to the career aspiration of each student user, can provide each student user with the ability and knowledge course teaching by the matching teacher user corresponding to his career aspirations, to achieve a personalized education program.

In one embodiment, in step S102 above, the student user information can be collected, and the first personalized characteristic of the student user can be extracted according to the student user information, and an ideal career role can be determined and recommended for the student user based on the student user information. For their selection, and then based on the selection operation of the student user, the target career role of the student user is determined. The student user information can be obtained through student user registration. The student user information may include, but is not limited to, the student user's name, age, region, educational experience, study major, hobbies, personality traits, etc. Collecting the student user information during student user registration can improve the convenience and accuracy of information collection. The first personalized characteristic may include the student user's personality traits, character strengths and weaknesses, hobbies, specialties, concerns, and other personalized characteristics.

In some embodiments, the global career role data can be collected in advance, and the relationship between different groups of people and the career roles they engage in can be obtained through big data analysis, and then according to the analyzed relationship, it can be determined and recommended ideal career roles for student users based on student user information. The recommendation page can adopt multiple forms such as pop-up windows and tables, which are not limited in the present invention.

Certainly, in some other embodiments, the target career role may also be input by the student user. For the target career role input by the student user, the target career role can be evaluated, the effort and path required to meet the requirements of the target career role can be analyzed, and compared with the paths of other recommended career roles, to help the student users better select target career roles. Specifically, for example, the first personalized course system that matches the target career role entered by the student user is compared with the first personalized course system that matches other recommended career roles to help the student user select the target career role.

In a preferred embodiment, step S102 can be further implemented as: according to the student user information, use artificial intelligence (Artificial Intelligence, AI) to analyze the student user's psychological profile and/or behavior trajectory, so as to identify the student user's first personalized characteristics. Furthermore, according to the first personalized characteristic of the student user, an ideal career role for the student user is determined and recommended for selection. Finally, the target career role of the student user is determined based on the selection operation of the student user. Through psychological profiling and/or behavioral trajectory analysis, it is possible to accurately identify the first personalized characteristics of student users, such as personality traits, character strengths and weaknesses, hobbies, specialties, and concerns, so that the career aspirations of student users can be more accurately determined, and the student users and career roles are precisely locked. In the embodiment of the present invention, existing AI psychological portrait methods can be used, such as using artificial intelligence robots to perform psychological portraits of users to describe psychological characteristics, etc. Of course, other methods can also be used, and the present invention does not specifically limit this.

By using artificial intelligence to make accurate portraits of student users, and then put forward an educational model and matching teachers for career aspiration guidance and suggestions, the personalized training goal of "thousands of people and thousands of faces" has been truly realized.

In some embodiments, after obtaining the target career role and the first personalized characteristic of the student user, they can be stored in the student information library.

The ability knowledge system library of the career roles involved in step S104 above may be pre-established by collecting occupational qualification data.

In some embodiments, the career qualification catalogs issued by the United Nations, China and other regions can be collected as career qualification data, and the career role knowledge system library can be established according to the corresponding knowledge and abilities required for each career role recorded in these career qualification catalogs. For example, according to the catalog of career occupational qualifications issued by China, the registered chemical engineers must have the knowledge and ability as stipulated in the Construction Law of the People's Republic of China, the Decision of The State Council on am-changing the Regulations on the Administration of Survey and Design of Construction Projects, the Regulations on the Administration of Registered Survey and Design Engineers, and the Interim Provisions on the Qualification System for Registered Chemical Engineers.

In some embodiments, the data of outstanding successful people in various career roles can also be collected as career qualification data, and the knowledge and abilities required for various career roles can be summarized by performing big data analysis on the data of these successful people quality. Specifically, artificial intelligence technology can be used to analyze the behavior patterns and behavior trajectories of these successful people, obtain the paths and conditions for the success of career roles, and transform these paths and conditions into the knowledge and abilities that career roles should possess.

In addition, for the emerging new occupations, big data analysis can also be used to collect and analyze the success paths and conditions of these new career roles as occupational qualification data.

Of course, it is also possible to gather the above-mentioned various data to pre-establish the ability knowledge system library of the career role.

The courses in the correspondence library can come from the pre-built education course library. The pre-built educational course library can be established by collecting global high-quality educational resources, including courses from different educational institutions (such as universities, technical training institutions, etc.) around the world, and can be continuously updated according to the changes in the courses of these educational institutions. As a result, it is possible to break through property rights barriers and cooperate with leading enterprises (organizations) in the industry to dynamically update the training plan.

In one embodiment, the teacher information library can be established in the following manner: using artificial intelligence to profile the teacher user, identify the knowledge ability and the second personalized characteristic possessed by the teacher user, and based on the identified knowledge ability and the second personalized characteristics build a teacher information library. Specifically, collect teacher user information, and use artificial intelligence to make accurate portraits of teacher users based on the collected teacher user information. The teacher user information can be obtained through teacher user registration. The teacher user information may include but not limited to teacher user's name, age, region, occupation, educational experience, career background, career certificates, hobbies, personality traits, etc. The second personalized characteristic may include the teacher user's personality traits, teaching style and other personalized characteristics. In this embodiment, artificial intelligence is used to make accurate portraits of teacher users to improve the knowledge ability of teacher users and the recognition accuracy of the second personalized characteristic, thereby improving the matching accuracy of teacher users, student users and their courses.

In a specific embodiment, step S104 can be further implemented as: searching the ability knowledge system library of the career role to determine an ability and knowledge system required by the target career role and searching the ability-knowledge-course corresponding relationship library to match a course corresponding to the ability and knowledge system required by the target career role and making the first personalized course system composed of the corresponding courses;
smart matching the first personalized course system with the knowledge and ability of the teacher user in the teacher information library, and matching the first personalized characteristic with the second personalized characteristic in the teacher information library, to determine the teacher user corresponding to the student user.

In the application, the intelligent matching between the first personalized course system and the knowledge ability of teacher users can actually be transformed into the matching between the ability and knowledge system required by the target career role corresponding to the first personalized course system and the knowledge ability of teacher users. The matching of the first personalized characteristic and the second personalized characteristic can be performed according to a preset matching principle (such as the matching principle of similar characteristics, or the matching principle of complementary characteristics, etc.). Through intelligent matching, we can develop a personalized course system that best suits their career aspirations for students and select the most suitable teachers to teach them, so as to ensure the quality of education.

Further, through the use of big data technology to accurately analyze and combine intelligent matching, a personalized course system exclusive to each student user is obtained, thereby forming a large number of personalized talent training programs, which can accurately connect a large number of educated person (that is, student users) and teachers (i.e. teacher users) who meet the needs of their ability training.

In some embodiments, the first personalized course system of the student user may include offline courses and/or online courses. By providing student users with an online and offline hybrid overall talent training program, the flexibility and comprehensiveness of teaching can be improved.

Specifically, the first personalized course system of a student user may include at least one of basic courses, personalized general education courses, philosophy courses, career courses, vocational ability courses, and the like. The basic course can be, for example, an existing basic course in a university, which can spread to all career roles, that is, the basic course can be shared by all career roles. General education courses can refer to courses that provide knowledge and values that are common among different groups of people, such as literature and art courses, history and culture courses, social analysis courses, moral ideal courses, language courses, etc. In practical application, the individualized general education courses required by the student users can be matched with the existing general education courses according to different individual student users. Philosophy courses (such as psychology courses) can provide non-utilitarian life value and emotional maturity improvement for student users. Career courses and career ability courses can provide student users with continuously enriched and optimized career knowledge and special career ability training, so as to dynamically support the knowledge and abilities required by career roles. Through rich courses and ability training, student users will be closer to their career roles and more able to meet the needs of the workplace.

In the above step S106, according to the first personalized course system matched for the student user, the online or offline teaching of the corresponding course is provided for the student user, and the teaching of the course is carried out under the guidance of the matching teacher user, so that it can realize the personalized education of "thousands of people and faces".

For offline courses, you can provide appointments, reminders, etc. to ensure that student users can teach courses on time and avoid missing courses. For a matching teacher user, the same method can also be used to ensure that the teacher user participates in the course teaching.

For online courses, considering the characteristics of the internet, a variety of technologies can be used to ensure the privacy, security and teaching effect of teaching.

In some embodiments, the anti-tampering characteristic of block chain can be used to apply block chain technology to online education to ensure the privacy and security of teaching. For example, the online courses in the student user's personalized course system can be stored in a distributed storage system (such as distributed multiple servers or server clusters), and the online learning client of the student user and the client of the teacher user can communicate with the distributed storage systems through block chain technology, and through block chain smart contracts or hash operations and digital signatures, the online courses of each user are prevented from being tampered with or stolen. Of course, for offline courses, block chain technology can also be used to ensure that the contract between the student user and his personalized course system and the corresponding teacher user is not tampered with, but at this time the course content is not stored in the distributed storage system but through online teaching.

In a further embodiment, before performing the course teaching in step S106, an electronic contract can be signed between the student user and the first personalized course system and the corresponding teacher user through block chain technology. In this way, the relationship contract formed by the three in the personalized education program is locked, the problem of tamper-proofing in the learning process is solved, and the privacy and security of teaching are improved.

In some embodiments, mature audio and video technology and/or advanced holographic image technology can also be used to build an online education learning platform and a simulation practice platform, so as to provide students with teaching resources for online courses. In this way, the teaching method can be more flexible and diverse, better teaching effect. In particular, holographic imaging technology can realize online high-simulation simulation teaching, and better ensure the teaching effect while realizing distance education.

In the educational method provided by the present invention, in the personalized teaching process, the student user's career aspiration (i.e., the target career role) can also be adjusted according to the student user's needs or changes, so as to provide the student user with more appropriate personalized courses.

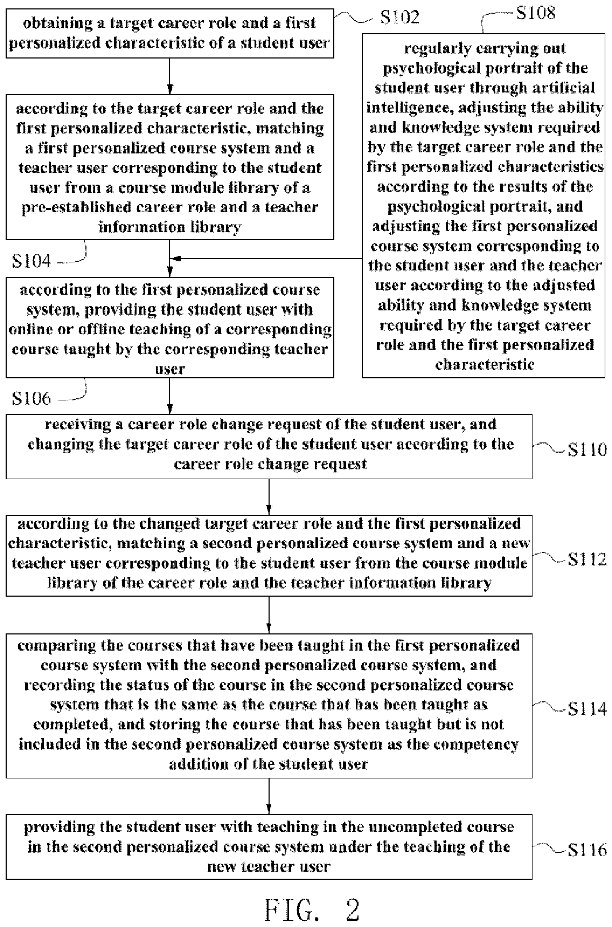

FIG. 2 shows a schematic flowchart of an online and offline hybrid education method based on student career aspirations for student users according to another embodiment of the present invention.

Referring to FIG. 2, in some embodiments, the educational method of the present invention may further include step S108: regularly carrying out psychological portrait of the student user through artificial intelligence, adjusting the ability and knowledge system required by the target career role and the first personalized characteristics according to the results of the psychological portrait, and adjusting the first personalized course system corresponding to the student user and the teacher user according to the adjusted ability and knowledge system required by the target career role and the first personalized characteristic. Correspondingly, after adjusting the first personalized course system and the teacher user corresponding to the student user, step S106 can be continued, wherein teaching is provided for the student user according to the adjusted first personalized course system and the teacher user, so as to realize optimization of personalized education programs for student users. The way to make a psychological portrait of the user is as described above, and will not be repeated here. Step S108 can be performed at different nodes of the educational method of the present invention. For example, it can be performed after matching the first personalized course system corresponding to the student user and the teacher user, or be performed in the process of providing the student user with the instruction of the corresponding course under the instruction of the corresponding teacher user according to the first personalized course system. Through regular psychological profiling, changes in the first personalized characteristics and career needs of student users can be grasped in a timely manner, so that deviations, optimization, and enrichment can be made to the ability requirements of student users in a timely manner, and then student users can be adjusted accordingly, so as to make the teaching provided more suitable for the career needs of student users.

Continuing to refer to FIG. 2, in some embodiments, the educational method of the present invention may further include the following steps S110 to S 116.
S110, receiving a career role change request of the student user, and changing the target career role of the student user according to the career role change request;
S112, according to the changed target career role and the first personalized characteristic, matching a second personalized course system and a new teacher user corresponding to the student user from the course module library of the career role and the teacher information library ;
S 114,comparing the courses that have been taught in the first personalized course system with the second personalized course system, and recording the status of the course in the second personalized course system that is the same as the course that has been taught as completed, and storing the course that has been taught but is not included in the second personalized course system as the competency addition of the student user ;
S 116, providing the student user with teaching in the uncompleted course in the second personalized course system under the teaching of the new teacher user.

Step S110 to step S116 can be performed at different nodes of the educational method of the present invention, for example, it can be performed after matching the first personalized course system corresponding to the student user and the teacher user, or it can be performed in the process of providing the student user with the instruction of the corresponding course under the instruction of the corresponding teacher user according to the first personalized curriculum system.

In this embodiment, by re-customizing the personalized course system and re-matching the teacher user according to the career role change request of the student user during the learning and growth process of the student user, the personalized education program can be more suitable for the user's needs. Furthermore, after the personalized course system is re-developed, the previously completed course will not be wasted, but will be jumped and synchronized to the personalized education program corresponding to the new target career role. If the previously completed course is consistent with the courses of the new personalized course system (That is, the second personalized course system), it will be recorded as completed to avoid repeated learning. If the previously completed course is not consistent with the courses of the new personalized course system , it will be stored as additional items of ability and quality to enhance the competitiveness of student users.

It should be noted that the second personalized course system and the first personalized course system are only used to distinguish the difference between the course combination corresponding to the original target career role and the course combination corresponding to the new target career role, but the properties of those are the same, and the operations performed on the first personalized course system can also be applied to the second personalized course system. For example, after the second personalized course system is matched, step S108 can also be executed to regularly carry out psychological portrait of the student user through artificial intelligence, adjust the ability and knowledge system required by the target career role and the second personalized characteristics according to the results of the psychological portrait.

In practical applications, after providing student users with the teaching of corresponding courses in their personalized course system, it can enable student users to form the career ability, quality, value, etc. required by the workplace, and help student users enter career roles smoothly. After the student user enters a career role the educational method of the present invention can still provide the student user with training courses that meet the needs to continue training and further enhance the student user's ability. The process steps of continuing training are similar to the steps of the education method described above, and will not be repeated here.

Furthermore, after the student user completes the teaching of the corresponding courses in the personalized course system and realizes the current career aspiration, a new career aspiration can be set up to continue learning for the new career aspiration. At this point, return to step S102 to conduct a new round of education based on career aspirations. In this way, continuous personalized education for student users can be realized, and talents in various aspects can be cultivated.

It should be noted that the above numbers of steps S108 and S110 are only used to distinguish different steps, and do not indicate the sequence relationship between the steps.

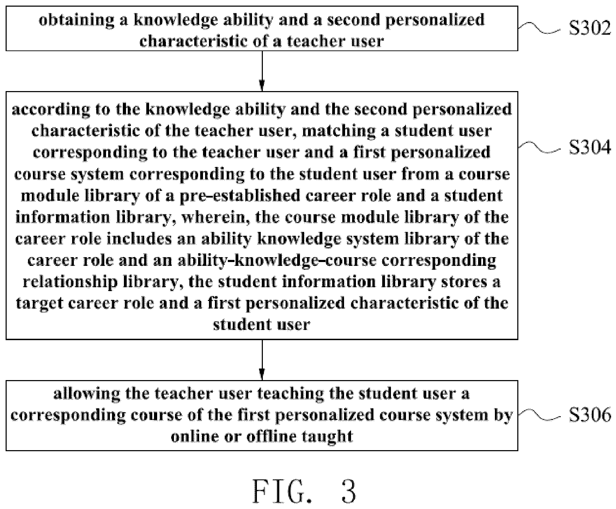

FIG. 3 shows a schematic flowchart of an online and offline hybrid education method based on student's career aspiration according to yet another embodiment of the present invention. The education method in this embodiment is oriented to teacher users. Referring to FIG. 3, the education method may at least include the following steps S302 to S306.

Step S302, obtaining a knowledge ability and a second personalized characteristic of a teacher user.

Step S304, according to the knowledge ability and the second personalized characteristic of the teacher user, matching a student user corresponding to the teacher user and a first personalized course system corresponding to the student user from a course module library of a pre-established career role and a student information library, wherein, the course module library of the career role includes an ability knowledge system library of the career role and an ability-knowledge-course corresponding relationship library, the student information library stores a target career role and a first personalized characteristic of the student user.

Step S306, allowing the teacher user teaching the student user a corresponding course of the first personalized course system by online or offline taught.

The online and offline hybrid education method based on student's career aspiration for teacher users provided by the embodiment of the present invention can match the corresponding student users and their personalized course system according to the knowledge ability and second personalized characteristics possessed by teacher users, it can provide each student user with the teaching of the ability and knowledge courses corresponding to the career aspiration, and realize the personalized education program.

In an embodiment, step S302 may be specifically implemented as: making a portrait of the teacher user by artificial intelligence, identifying the knowledge ability and the second personalized characteristic possessed by the teacher user. The portrait method of the teacher user is as described above and will not be repeated here.

In some embodiments, after acquiring the knowledge ability and the second personalized characteristic possessed by the teacher user, they can be stored in the teacher information library.

In one embodiment, step S304 may be further implemented as:
searching the ability knowledge system library of the career role to determine a career role corresponding to an knowledge ability possessed by the teacher user, matching the corresponding career role with the target career role of the student information library , and smart matching the second personalized characteristic with the first personalized course system of the student information library, to determine the student user corresponding to the teacher user;
searching the ability knowledge system library of the career role to determine an ability and knowledge system required by the target career role and searching the ability-knowledge-course corresponding relationship library to match a course corresponding to the ability and knowledge system required by the target career role and making the first personalized course system composed of the corresponding courses.

The competency knowledge system library of the career role involved in step S304 may be pre-established by collecting occupational qualification data.

The student information library can be established in the following ways:
according to the student user information, using artificial intelligence to analyze the student user's psychological profile and/or behavior trajectory, so as to identify the first personalized characteristic of the student user;
determining and recommending an ideal career role for the student user for selection according to the first personalized characteristic;
determining the target career role of the student user according to a selection operation of the student user;
establishing the student information library based on the target career role of the student user and a first personalized characteristic.

In a further embodiment, the first personalized characteristic of the student user in the student information library can be adjusted according to the result of regularly performing psychological portraits of the student user through artificial intelligence. The manner of adjusting the first personalized characteristic according to the result of the artificial intelligence psychological profiling is as described above, and will not be repeated here.

In a further embodiment, the target career role of the student user in the student information library can be changed according to the student user's career role change request.

In a further embodiment, before performing step S306, it also can sign an electronic contract between the teacher user, the corresponding student user and the first personalized course system through block chain technology. Thus the relationship contract formed by the three in the personalized education program, the problem of tamper-proof learning process is solved, and the privacy and security of teaching are improved.

The first personalized course system may include offline courses and/or online courses.

In one embodiment, when the first personalized course system includes online courses, step S306 may be further implemented as: based on audio and video technology and/or holographic image technology, let the teacher user teach an online course for the corresponding student user, to enhance the teaching effect.

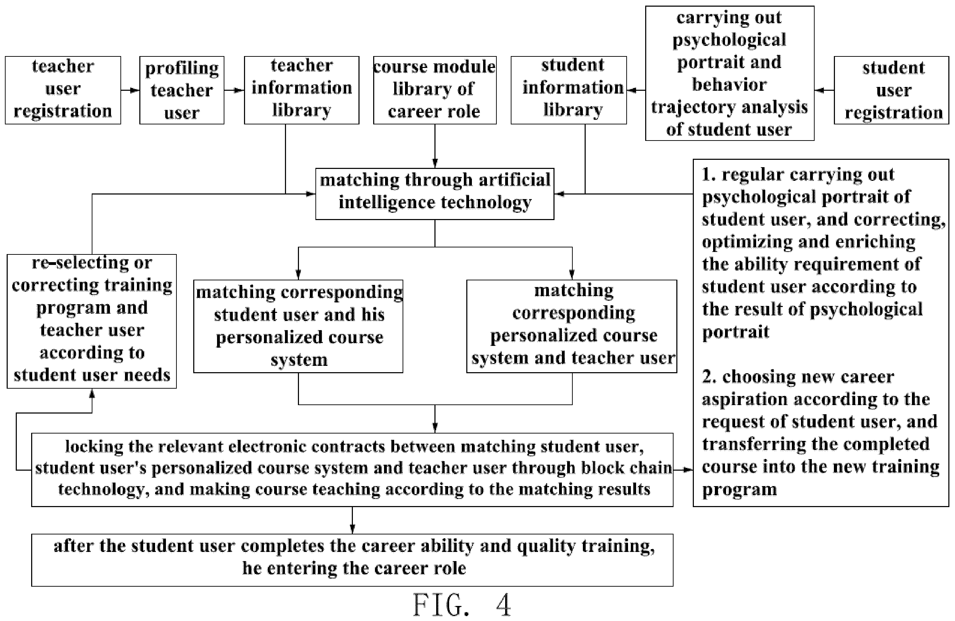

Referring to FIG. 4, an online and offline hybrid education method based on student's career aspiration according to an embodiment of the present invention will be described in detail in conjunction with student users and teacher users.

As shown in FIG. 4, on the student user side, after the student user registers, the psychological portrait and behavior trajectory analysis of the student user is carried out to obtain the student user's target career role and the first personalized characteristic, and the student user's target career role and the first personalization characteristic constitutes the student information library. On the teacher user side, after the teacher user registers, the teacher user is profiled to obtain the knowledge ability and second personalized characteristics of the teacher user, and the teacher information library is formed with the knowledge ability and second personalized characteristics of the teacher user. The course module library matches through artificial intelligence technology according to the student information library, the teacher information library and the career roles, and matches the corresponding personalized course system and teacher users for student users, and matches the corresponding student users and their personalization course system for teacher users. Afterwards, the relevant electronic contracts between matching student user, student user's personalized course system and teacher user are locked through block chain technology, and according to the matching results (that is, the matching student user, student user's personalized course system and teacher users) to making course teaching. Finally, after the student user completes the career ability and quality training, he enters the career role. In the process of teaching and training, according to the needs of student users, it is possible to reselect or correct the personalized course system (that is, the training program) and the matching of teachers (that is, the matching teacher users). In addition, in the process of teaching and training, it is also possible to regularly conduct psychological portraits of student users, correct, optimize and enrich the ability requirements of student users based on the results of the psychological portraits, and then adjust the personalized course system of student users and matching teacher users. In the process of teaching and training, new career aspirations (that is, new target career roles) can also be selected according to the student user's request, and then it can return to the artificial intelligence matching step to match a new personalized course system and a new teacher user to form a new training program, and transfer the completed courses to the new training program.

This embodiment can match between the student user and the teacher user according to the target career role of the student user and the first personalized characteristic, and the knowledge ability and the second personalized characteristic of the teacher user, and make the personalized course system for student users, so as to provide the ability and knowledge course teaching corresponding to every students' career aspiration and taught by the matching teacher user according to every students' career aspiration, and realizes the personalized education program.

Based on the same inventive concept, the embodiment of the present invention also provides an online and offline hybrid education system based on student's career aspiration.

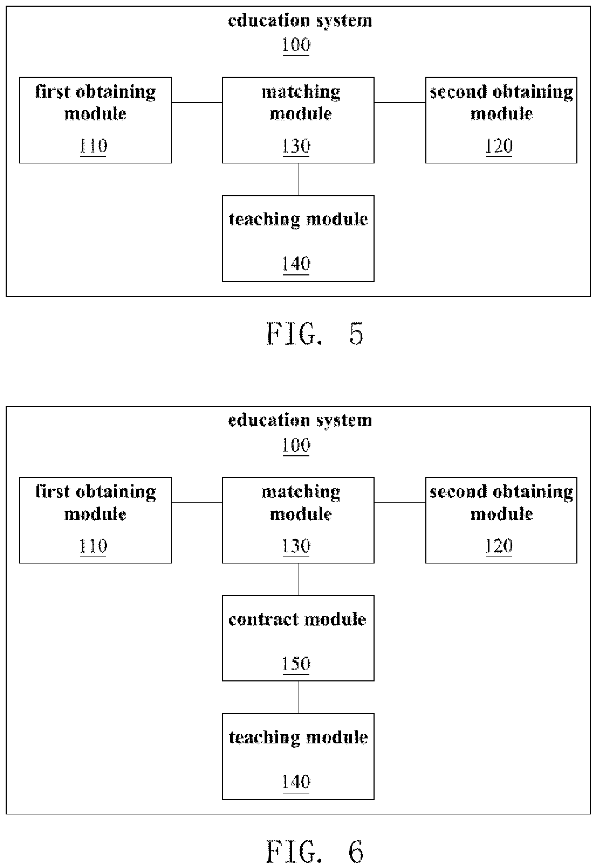

FIG. 5 shows a schematic structural diagram of an online and offline hybrid education system 100 based on student's career aspiration according to an embodiment of the present invention. As shown in FIG. 5, the education system 100 may generally include a first obtaining module 110, a second obtaining module 120, a matching module 130 and a teaching module 140. The first obtaining module 110 is configured to obtain the target career role and the first personalized characteristic of the student user. The second obtaining module 120 is configured to obtain the knowledge ability and the second personalized characteristic possessed by the teacher user. The matching module 130 is connected to the first obtaining module 110 and the second obtaining module 120 respectively, and is configured to be based on the target career role and the first personalized characteristic of the student user, as well as the knowledge ability and the second personalized characteristic of the teacher user, based on the pre-established course module library of career roles, matching the first personalized course system and teacher users corresponding to student users, wherein the course module library of career roles includes the ability knowledge system library and ability knowledge and courses of career roles corresponding relationship library. The teaching module 140 is connected with the matching module 130 and is configured to provide online or offline teaching of the corresponding courses taught by corresponding teacher users for student users according to the first personalized course system. The course module library of the first personalization characteristic, the second personalization characteristic and the career role has been introduced above, and will not be repeated here.

In some embodiments, after the first obtaining module 110 obtains the target career role and the first personalized characteristic of the student user, they may be stored in the student information library. Similarly, after the second obtaining module 120 obtains the knowledge ability and the second personalized characteristic possessed by the teacher user, it can also store them in the teacher information library. Further, the matching module 130 can match the personalized course system of the student user, and match between the student user and the teacher user, based on the student information library, the teacher information library and the course module library of career roles.

Specifically, for student user, the matching module 130 is also configured to: search the ability knowledge system library of the career role to determine an ability and knowledge system required by the target career role, and search the ability-knowledge-course corresponding relationship library to match a course corresponding to the ability and knowledge system required by the target career role and making the first personalized course system composed of the corresponding courses; smart matching the first personalized course system with the knowledge and ability of the teacher user in the teacher information library, and match the first personalized characteristic with the second personalized characteristic in the teacher information library, to determine the teacher user corresponding to the student user.

For the teacher user, the matching module 130 is also configured to: search the ability knowledge system library of the career role to determine a career role corresponding to an knowledge ability possessed by the teacher user, match the corresponding career role with the target career role of the student information library , and smart match the second personalized characteristic with the first personalized course system of the student information library, to determine the student user corresponding to the teacher user; search the ability knowledge system library of the career role to determine an ability and knowledge system required by the target career role and searching the ability-knowledge-course corresponding relationship library to match a course corresponding to the ability and knowledge system required by the target career role and making the first personalized course system composed of the corresponding courses.

In some embodiments, the first obtaining module 110 can also be configured to: according to the student user information, use artificial intelligence to analyze the student user's psychological profile and/or behavior trajectory, so as to identify the first personalized characteristics of the student user; determines and recommends the student user's ideal career role for selection according to the first personalized characteristic; based on the student user's selection operation, determine the student user's target career role.

In some embodiments, the second acquiring module 120 may also be configured to: use artificial intelligence to profile the teacher user to identify the knowledge ability and the second personalized characteristic possessed by the teacher user.

In some embodiments, the first obtaining module 110 can also be configured to: regularly carry out psychological portrait of the student user through artificial intelligence, adjust the ability and knowledge system required by the target career role and the first personalized characteristics according to the results of the psychological portrait. Correspondingly, the matching module 130 may also be configured to: adjust the first personalized course system corresponding to the student user and the teacher user according to the adjusted ability and knowledge system required by the target career role and the first personalized characteristic.

In some embodiments, the first acquiring module 110 may also be configured to: receive a career role change request of the student user, and change the target career role of the student user according to the career role change request. Correspondingly, the matching module 130 can also be configured to: according to the changed target career role and the first personalized characteristic, match a second personalized course system and a new teacher user corresponding to the student user from the course module library of the career role and the teacher information library; compare the courses that have been taught in the first personalized course system with the second personalized course system, and record the status of the course in the second personalized course system that is the same as the course that has been taught as completed, and store the course that has been taught but is not included in the second personalized course system as the competency addition of the student user. The teaching module 140 may also be configured to: provide the student user with teaching in the uncompleted course in the second personalized course system under the teaching of the new teacher user.

In some embodiments, as shown in FIG. 6, the education system 100 may further include a contract module 150. The contract module 150 is connected between the matching module 130 and the teaching module 140, and is configured to sign an electronic contract between the student user, the first personalized course system and the corresponding teacher user through block chain technology to solve the problem of tamper-proof learning process.

In some embodiments, the first personalized course system includes online courses. In this case, the teaching module 140 can also be configured to provide the online course teaching resources to the student user and the corresponding teacher user based on audio-video technology and/or holographic image technology, to complete the study.

Based on the same inventive concept, an embodiment of the present invention also provides an electronic device, which includes: a processor; and a memory for storing instructions executable by the processor; an online and offline hybrid education method based on student's career aspiration in an embodiment or a combination of embodiments.

Based on the same inventive concept, an embodiment of the present invention also provides a storage medium. When the instructions in the storage medium are executed by the processor of the electronic device, the electronic device can execute the online and offline hybrid education method based on the student's career aspiration according to any embodiment or combination of embodiment mentioned above.

Those skilled in the art can clearly understand that for the specific working processes of the above-described systems, devices, and units, reference can be made to the corresponding processes in the foregoing method embodiments, and for the sake of brevity, details are not described here.

In addition, each functional unit in each embodiment of the present invention may be physically independent of each other, or two or more functional units may be integrated together, or all functional units may be integrated into one processing unit. The above-mentioned integrated functional units can be implemented not only in the form of hardware, but also in the form of software or firmware.

Those skilled in the art can understand that: if the integrated functional unit is implemented in the form of software and sold or used as an independent product, it can be stored in a computer-readable storage medium. Based on this understanding, the essence of the technical solution of the present invention or all or part of the technical solution can be embodied in the form of software products, the computer software products are stored in a storage medium, which includes a number of instructions to make a computing device (such as a personal computer, a server, or a network device, etc.) executes all or part of the steps of the methods described in the various embodiments of the present invention when executing the instructions. The aforementioned storage medium includes: U disk, mobile hard disk, read-only memory (ROM), random access memory (RAM), magnetic disk or optical disk, and various media capable of storing program codes.

Alternatively, all or part of the steps for realizing the aforementioned method embodiments may be implemented by program instruction-related hardware (such as a personal computer, server, or computing device such as a network device), and the program instructions may be stored in a computer-readable memory In the medium, when the program instructions are executed by the processor of the computing device, the computing device executes all or part of the steps of the methods described in the various embodiments of the present invention.

Finally, it should be noted that: the above embodiments are only used to illustrate the technical solutions of the present invention, rather than limit them; although the present invention has been described in detail with reference to the foregoing embodiments, those of ordinary skill in the art should understand that: Within the spirit and principles of the present invention, it is still possible to modify the technical solutions described in the foregoing embodiments, or to perform equivalent replacements for some or all of the technical characteristics; and these modifications or replacements do not make the corresponding technical solutions deviate from protection scope of the present invention.

## Claims

1. An online and offline hybrid education method based on a student's career aspiration, including:
obtaining a target career role and a first personalized characteristic of a student user;
according to the target career role and the first personalized characteristic, matching a first personalized course system and a teacher user corresponding to the student user from a course module library of a pre-established career role and a teacher information library;
according to the first personalized course system, providing the student user with online or offline teaching of a corresponding course taught by the corresponding teacher user;
wherein, the course module library of the career role includes an ability knowledge system library of the career role and an ability-knowledge-course-corresponding-relationship library, the teacher information library stores a knowledge ability and the second personalized characteristics of the teacher user.

2. The educational method according to claim **1,** wherein,
the step of obtaining the target career role and the first personalized characteristic of a student user includes:
according to a student user information, analyzing the student user's psychological profile and/or behavior trajectory through artificial intelligence, so as to identify the first personalized characteristic of the student user;
determining and recommending an ideal career role for the student user for selection according to the first personalized characteristic;
determining the target career role of the student user according to a selection operation of the student user.

3. The educational method according to claim **1,** wherein,
the step of according to the target career role and the first personalized characteristic, matching the first personalized course system and the teacher user corresponding to the student user from the course module library of the pre-established career role and the teacher information library includes:
searching the ability knowledge system library of the career role to determine an ability and knowledge system required by the target career role and searching the ability-knowledge-course corresponding relationship library to match a course corresponding to the ability and knowledge system required by the target career role and making the first personalized course system composed of the corresponding courses;
smart matching the first personalized course system with the knowledge and ability of the teacher user in the teacher information library, and matching the first personalized characteristic with the second personalized characteristic in the teacher information library, to determine the teacher user corresponding to the student user.

4. The educational method according to claim **1,** wherein,
the teacher information library is established in the following way:
making a portrait of the teacher user by artificial intelligence, identifying the knowledge ability and the second personalized characteristic possessed by the teacher user, and establishing the teacher information library based on the identified knowledge ability and the second personalized characteristic;
wherein the ability knowledge system library of the career role is pre-established by collecting occupational qualification data.

5. The educational method according to claim **3,** wherein, after matching the first personalized course system and the teacher user corresponding to the student user, the method further includes:
regularly carrying out psychological portrait of the student user through artificial intelligence, adjusting the ability and knowledge system required by the target career role and the first personalized characteristics according to the results of the psychological portrait, and adjusting the first personalized course system corresponding to the student user and the teacher user according to the adjusted ability and knowledge system required by the target career role and the first personalized characteristic.

6. The educational method according to claim **1,** wherein, after matching the first personalized course system and the teacher user corresponding to the student user, the method further includes:
receiving a career role change request of the student user, and changing the target career role of the student user according to the career role change request;
according to the changed target career role and the first personalized characteristic, matching a second personalized course system and a new teacher user corresponding to the student user from the course module library of the career role and the teacher information library;
comparing the courses that have been taught in the first personalized course system with the second personalized course system, and recording the status of the course in the second personalized course system that is the same as the course that has been taught as completed, and storing the course that has been taught but is not included in the second personalized course system as the competency addition of the student user;
providing the student user with teaching in the uncompleted course in the second personalized course system under the teaching of the new teacher user.

7. The educational method according to claim **1,** wherein, before according to the first personalized course system, providing the student user with online or offline teaching of the corresponding course taught by the corresponding teacher user, the method also includes:
signing an electronic contract between the student user, the first personalized course system and the corresponding teacher user through block chain technology.

8. The educational method according to claim **1,** wherein, the first personalized course system includes an online course;
the step of according to the first personalized course system, providing the student user with online or offline teaching of a corresponding course taught by the corresponding teacher user includes:
providing the online course teaching resources to the student user based on audio and video technology and/or holographic image technology.

9. An online and offline hybrid education method based on student's career aspiration, including:
obtaining a knowledge ability and a second personalized characteristic of a teacher user;
according to the knowledge ability and the second personalized characteristic of the teacher user, matching a student user corresponding to the teacher user and a first personalized course system corresponding to the student user from a course module library of a pre-established career role and a student information library, wherein, the course module library of the career role includes an ability knowledge system library of the career role and an ability-knowledge-course corresponding relationship library, the student information library stores a target career role and a first personalized characteristic of the student user;
allowing the teacher user teaching the student user a corresponding course of the first personalized course system by online or offline taught.

10. The educational method according to claim **9,** wherein, the step of obtaining a knowledge ability and a second personalized characteristic of a teacher user includes:
making a portrait of the teacher user by artificial intelligence, identifying the knowledge ability and the second personalized characteristic possessed by the teacher user.

11. The educational method according to claim **9,** wherein the step of according to the knowledge ability and the second personalized characteristic, matching the student user corresponding to the teacher user and a first personalized course system corresponding to the student user from the course module library of the pre-established career role and the student information library includes:
searching the ability knowledge system library of the career role to determine a career role corresponding to an knowledge ability possessed by the teacher user, matching the corresponding career role with the target career role of the student information library , and smart matching the second personalized characteristic with the first personalized course system of the student information library, to determine the student user corresponding to the teacher user;
searching the ability knowledge system library of the career role to determine an ability and knowledge system required by the target career role and searching the ability-knowledge-course corresponding relationship library to match a course corresponding to the ability and knowledge system required by the target career role and making the first personalized course system composed of the corresponding courses.

12. The educational method according to claim **9,** wherein, the student information library is established in the following ways:
according to the student user information, using artificial intelligence to analyze the student user's psychological profile and/or behavior trajectory, so as to identify the first personalized characteristic of the student user;
determining and recommending an ideal career role for the student user for selection according to the first personalized characteristic;
determining the target career role of the student user according to a selection operation of the student user;
establishing the student information library based on the target career role of the student user and a first personalized characteristic;
wherein the ability knowledge system library of the career role is pre-established by collecting occupational qualification data.

13. The educational method according to claim **9,** wherein, the first personalized characteristic of the student user in the student information library is adjusted according to the results of regularly performing psychological portraits of the student user through artificial intelligence.

14. The educational method according to claim **9,** wherein, the target career role of the student user of the student information library is changed according to the student user's career role change request.

15. The educational method according to claim **9,** wherein, before allowing the teacher user teaching the student user the corresponding course of the first personalized course system by online or offline taught, the method further includes:
signing an electronic contract between the teacher user, the corresponding student user and the first personalized course system through block chain technology.

16. The educational method according to claim **9,** wherein, the first personalized course system includes an online course;
the step of allowing the teacher user teaching the student user a corresponding course of the first personalized course system by online or offline taught includes:
providing the online course teaching resources to the student user based on audio and video technology and/or holographic image technology.

17. An online and offline hybrid education system based on student's career aspiration, including:
a first obtaining module, configured to obtain a target career role and a first personalized characteristic of a student user;
a second obtaining module, configured to obtain a knowledge ability and a second personalized characteristic of a teacher user;
a matching module, configured to according to the target career role and the first personalized characteristic, and the knowledge ability and the second personalized characteristic of the teacher user, matching a first personalized course system and the teacher user corresponding to the student user from a course module library of a pre-established career role and
a teaching module, is configured to providing the student user with online or offline teaching of a corresponding course taught by the corresponding teacher user, according to the first personalized course system;
wherein, the course module library of the career role includes an ability knowledge system library of the career role and an ability-knowledge-course corresponding relationship library.

18. An electronic device, including: a processor; and a memory for storing instructions executable by the processor; wherein the processor is configured to execute the instructions, so as to implement the online and offline hybrid education method based on student's career aspiration as any one of claims **1** to **16.**

19. A storage medium, when the instructions in the storage medium are executed by the processor of the electronic device, the electronic device can execute the online and offline hybrid education method based on the student's career aspiration according to any one of claims **1** to **16.**
